# EUROPÄISCHE PATENTSCHRIFT

(11) **EP 0 673 808 B1**
(45) Veröffentlichungstag und Bekanntmachung des Hinweises auf die Patenterteilung: **09.09.1998**
(21) Anmeldenummer: 95103800.9
(22) Anmeldetag: 16.03.1995
(51) Int. Cl.: B60R 21/22

(54) **Gassack-Aufprallschutz-Baueinheit**
Crash protecting air bag module
Module de sac gonflable pour protection en cas d'accident

(30) Priorität: 22.03.1994 DE 4409770
(43) Veröffentlichungstag der Anmeldung: 27.09.1995
(73) Patentinhaber: P A R S Passive Rückhaltesysteme GmbH, 63755 Alzenau (DE)
(72) Erfinder: Hoffmann, Rainer, D-63755 Alzenau (DE); Fellhauer, Joachim, D-63741 Aschaffenburg (DE)
(74) Vertreter: Fuchs Mehler Weiss & Fritzsche

(56) Entgegenhaltungen:
- EP-A- 0 584 781
- PATENT ABSTRACTS OF JAPAN vol. 017 no. 248 (M-1411) ,18.Mai 1993 & JP-A-04 368250 (TOYOTA MOTOR CORP) 21.Dezember 1992,
- RESEARCH DISCLOSURE, Nr. 268, August 1986 EMSWORTH, HAMPSHIRE, G.-B., Seite 477 'windshield system'
- PATENT ABSTRACTS OF JAPAN vol. 018 no. 177 (M-1582) ,25.März 1994 & JP-A-05 338513 (TOYOTA MOTOR CORP) 21.Dezember 1993,

## Beschreibung

Die Erfindung betrifft eine Gassack-Aufprallschutz-Baueinheit für die Seitentüren von Kraftfahrzeugen zum Schutz gegen einen dynamischen Seitenaufprall, deren entfalteter Gassack sich in den Raum zwischen dem Kopf-Thorax-Bereich des Fahrzeuginsassen und der unmittelbar benachbarten Seitenstruktur des Kraftfahrzeugs erstreckt.

Obwohl der Seitenaufprall von Kraftfahrzeugen nur 20 % aller Unfälle ausmacht, gehört der Seitenaufprall zu den Unfallarten mit den schwersten Verletzungen. Um die Gefahr schwerer und tödlicher Verletzungen von Insassen von Personenkraftwagen bei einem Seitenaufprall zu reduzieren, werden gemäß US-Standard Nr. 214 (FMVSS 214) seit September 1993 bestimmte Anforderungen an die Aufpralleigenschaften von Personenkraftwagen - ausgedrückt in Beschleunigungswerten - gestellt. So darf jeder Personenkraftwagen bei einem Seitenaufprall mittels einer mit einer Geschwindigkeit von 53,9 km/h bewegten, verformbaren, unter einem Winkel von 63° auf den Personenkraftwagen auftreffenden Barriere für den Insassen die Seitenbeschleunigung des Brustkorbs von 85 g für Personenkraftwagen mit vier Seitentüren und 90 g für Personenkraftwagen mit zwei Seitentüren und die Beschleunigung des Beckens von 130 g nicht überschreiten. Zur Erhöhung der passiven Sicherheit ist in der DE-A-2 249 988 im Kopfbereich des Fahrzeuginsassen eine im seitlichen Dachrahmen des Fahrzeugs angeordnete Gassack-Aufprall-Schutzeinheit vorgesehen, deren Gassack im entfalteten Zustand zwischen dem Kopf des Fahrzeuginsassen und der Seitenwand des Fahrzeugs zu liegen kommt. In der DE-C-3 422 263 ist eine Sicherheitseinrichtung zum Schutz von Fahrzeuginsassen gegen einen Seitenaufprall beschrieben, bei der über die Deformation der Karosserie ein in der Seitenwand des Fahrzeugs angeordneter volumenveränderbarer Gasgenerator einen im seitlichen Dachraum des Fahrzeugs befindlichen Gassack aufbläst. Die GB-A-2 220 620, DE-A-4 223 620 und DE-A-4 301 193 zeigen eine in der Seitentür eines Kraftfahrzeugs untergebrachte Gassack-Aufprall-Schutzeinheit. Im Falle eines Seitenaufpralls soll der sich aufblasende Gassack zwischen den Fahrzeuginsassen und die Seitenwand des Fahrzeugs schieben. Die gattungsbildende DE-A-4 119 788 befaßt sich mit einer Gassack-Aufprall-Schutzeinheit, die in einem verkleideten Seitenteil eines Kraftfahrzeugs angeordnet ist und die aus einem hinter der Seitenteilverkleidung angebrachten aufblasbaren Schutzkissen besteht. Ein das Schutzkissen in der Ausgangslage abdeckender Bereich der Seitenverkleidung ist in Richtung Fahrzeuginnenraum zur Bildung einer Öffnung für den Durchtritt eines Teils des sich beim Aufblasen ausdehnenden Schutzkissens um einen spitzen Winkel herausschwenkbar. Das Schutzkissen ist an einem an die Gaszufuhröffnung anschließenden Bereich teilentfaltet angebracht. Bei der in der DE-A-4 223 620 dargestellten Gassack-Aufprall-Schutzeinheit sind ein Gasgenerator und der damit verbundene aufblasbare Gassack an einer Stelle innerhalb des Fahrzeugkörpers seitlich von dem Fahrzeuginsassen angeordnet. Der Gasstrom ist nach oben in den Gassack gerichtet, so daß der Gassack nach oben aufgeblasen wird und einen Raum zwischen dem Fahrzeuginsassen und der dem Fahrzeuginsassen benachbarten Seitenstruktur des Kraftfahrzeugs ausfüllt. In der DE-A-4 210 562 ist eine Vorrichtung für den Schutz von Insassen eines Kraftfahrzeugs bei einem Seitenaufprall wiedergegeben, die aus einer Mehrzahl im aktivierten Zustand länglicher, sich parallel zueinander im wesentlichen in einer gemeinsamen Vertikalebene erstreckender Airbags besteht, die an nebeneinander liegenden Enden mit individuellen, gleichzeitig zündenden Gasgeneratoren verbunden sind, die im wesentlichen nebeneinander im Fahrzeug- oder Sitzaufbau untergebracht sind. Diese Vorrichtung ist mit einem nicht unbeachtlichen Aufwand verbunden. Im übrigen besteht der Nachteil der vorstehend beschriebenen Gassack-Aufprall-Schutzeinheiten darin, daß der sich entfaltende Gassack stets in Richtung auf den Fahrzeuginsassen hin ausdehnt und den Raum zwischen Fahrzeuginsassen und Seitenstruktur des Fahrzeugs vollständig ausfüllt, so daß eine verfrühte Energieübertragung von dem Gassack auf den Fahrzeuginsassen erfolgt und der Fahrzeuginsasse in Verletzungen bewirkender Weise belastet wird.

Aus der EP-A-0 584 781 ist ein Gassack-Rückhaltesystem für Fahrzeuge bekannt geworden, welches in der linken oberen Ecke des Fensterausschnittes einer Seitentür eines KFZ angeordnet ist. Im Inneren sind zwei langgestreckte Führungselemente angeordnet, die für eine zuverlässige Entfaltung des Gassackes sorgen sollen und für eine Abstützung des entfalteten Luftsackes vorgesehen sind. Dieser Gassack betrifft ausschließlich den Kopfbereich. Der in dieser Druckschrift beschriebene Airbag ist demnach ein Kopfairbag.

Aufgabe der vorliegenden Erfindung ist es, die eingangs beschriebene Gassack-Aufprallschutz-Baueinheit so zu gestalten, daß der vollständig entfaltete Gassack die Tiefe des Raums zwischen dem Kopf-Thorax-Bereich des Fahrzeuginsassen und der Seitenstruktur nur teilweise ausfüllt und eine verfrühte Energieübertragung von dem sich aufblasenden Gassack auf den Fahrzeuginsassen weitgehend unterbleibt.

Die Losung dieser Aufgabe besteht darin, daß die Gassack-Aufprallschutz-Baueinheit vor der Innenseite der Fensterscheibe in dem durch die Fensterbrüstung der Seitentür und dem durch den oberen Abschnitt des der B-Säule oder C-Säule der Kraftfahrzeugkarosserie benachbarten Türrahmens begrenzten Eckfeld angebracht und die Abdeckung der Gassack-Aufprallschutz-Baueinheit mit Fangbändern versehen ist.

Dabei dienen die Fangbänder dazu, den Weg der Abdeckkappe so zu begrenzen, daß diese die Ausdehnung des sich ausdehnenden Gassackes zum einen Teil nach oben unmittelbar vor die Fensterscheibe und zum anderen vor den oberen Abschnitt der Innenverkleidung der Seitentür lenkt und daß der sich ausdehnende Gassack bzw. die Abdeckung den Fahrzeuginsassen nicht berühren.

Die Gassack-Aufprallschutz-Baueinheit ist entweder auf der Fensterbrüstung, d.h. auf dem oberen Rand der Innenverkleidung der Fahrzeugtür angeordnet oder mit ihrem unteren Abschnitt in die Fensterbrüstung eingelassen.

In der Regel enthält die Gassack-Aufprallschutz-Baueinheit den zusammengefalteten Gassack, den Gasgenerator und die Abdeckung. Es ist jedoch auch möglich, daß der Gasgenerator getrennt von der Gassack-Aufprallschutz-Baueinheit hinter der Innenverkleidung der Fahrzeugtür angeordnet und mittels einer Überströmleitung mit der Gaseintrittsöffnung des Gassacks verbunden ist.

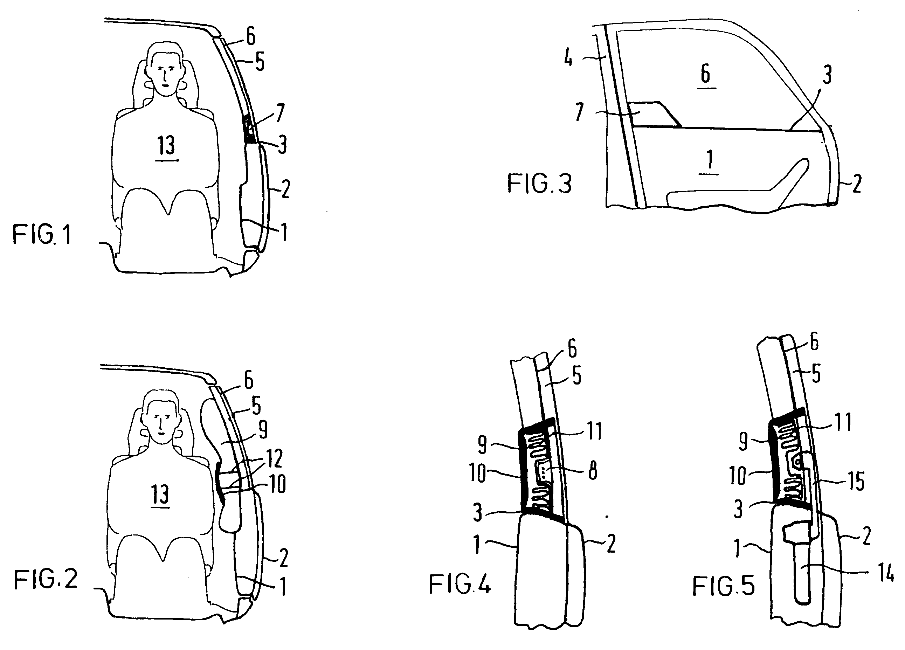

In den Zeichnungen sind Ausführungsbeispiele der Erfindung dargestellt, die nachfolgend näher erläutert werden. Es zeigen
Fig. 1 und Fig. 2 einen Teilquerschnitt durch den Insassenraum eines Personenkraftwagens im Bereich des linken Vordersitzes mit auf der Fensterbrüstung angebrachter Gassack-Aufprallschutz-Baueinheit,
Fig. 3 eine Teilansicht der Innenseite der linken Vordertür mit auf der Fensterbrüstung angebrachter Gassack-Aufprallschutz-Baueinheit,
Fig. 4 eine vergrößerte Darstellung eines Querschnitts durch die Gassack-Aufprallschutz-Baueinheit gemäß Detail "X" der Fig. 1,
Fig. 5 eine vergrößerter Darstellung eines Querschnitts durch eine abgewandelte Form einer Gassack-Aufprallschutz-Baueinheit.

In dem durch den oberen Rand der Innenverkleidung (1) der linken Vordertür (2) eines Personenkraftwagens gebildeten Fensterbrüstung (3) und dem durch den oberen Abschnitt des der B-Säule (4) benachbarten Abschnitt des Türrahmens (5) begrenzten Eckfeld ist auf der Fensterbrüstung (3) vor der Fensterscheibe (6) eine Gassack-Aufprallschutz-Baueinheit (7) befestigt, die aus dem Gasgenerator (8), dem im Ruhezustand in Faltlagen um den Gasgenerator (8) angeordneten Gassack (9) und der Abdeckkappe (10) aus elastischem Kunststoff besteht. Der Gasgenerator (8) und der Rand der Gaseintrittsöffnung des Gassacks (9) sind an dem Halteblech (11) befestigt, auf dessen umlaufendem Rand die unteren Ränder der Seitenwände der Abdeckkappe (10) aufgeclipst sind. An den Kanten, an denen die Seitenwände der Abdeckkappe (11) gegen deren Vorderwand stoßen, ist die Wanddicke der Abdeckkappe relativ dünn ausgebildet, damit die Seitenwände flexibel nach außen schwenkbar sind. An den Kanten, an denen die Seitenwände gegeneinander stoßen, und oberhalb der Verclipsung der Seitenwände der Abdeckung (10) mit dem Halteblech (11) sind Sollbruchlinien vorgesehen, entlang denen die Abdeckkappe (10) bei sich ausdehnendem Gassack auf- bzw. abreißt. Auf der Innenseite der Vorderwand der Abdeckkappe (10) sind mit dem Halteblech (11) verbundene Fangbänder (12) befestigt, die den Weg der Abdeckkappe (10) in der Weise begrenzen, daß diese die Ausdehnung des sich ausdehnenden Gassacks (9) zum einen Teil nach oben unmittelbar vor die Fensterscheibe (6) und zum anderen Teil vor den oberen Abschnitt der Innenverkleidung (1) der Vordertür (2) lenkt und der sich ausdehnende Gassack (9) bzw. die Abdeckung (10) den Fahrzeuginsassen (13) nicht berührt und demzufolge eine verfrühte Energieübertragung auf den Fahrzeuginsassen nicht stattfindet. Bei der in Fig. 5 wiedergegebenen Ausführungsform der Gassack-Aufprallschutz-Baueinheit (7) ist der Gasgenerator (14) hinter der Innenverkleidung (1) der Vordertür (2) des Personenkraftwagens angeordnet und steht über eine Überströmleitung (15) mit der Gaseintrittsöffnung des Gassacks (9) in Verbindung.

Der mit der Erfindung erzielte Vorteil besteht darin, daß der Fahrzeuginsasse durch den sich aufblasenden Gassack nicht berührt wird und damit eine verfrühte Energieübertragung mit der damit verbundenen Verletzungsgefahr für den Fahrzeuginsassen nicht stattfindet. Die Seitenverlagerung des Fahrzeuginsassen erfolgt erst dann, wenn der Gassack vollständig entfaltet und die Schutzfunktion des Gassacks für den Kopf-Thorax-Bereich gewährleistet ist.

## Patentansprüche

1. Gassack-Aufprallschutz-Baueinheit (7) für die Seitentüren (2) von Kraftfahrzeugen zum Schutz gegen einen dynamischen Seitenaufprall, deren entfalteter Gassack (9) sich in den Raum zwischen dem Kopf-Thorax-Bereich des Fahrzeuginsassen (13) und der unmittelbar benachbarten Seitenstruktur des Kraftfahrzeugs erstreckt und im Ruhezustand von einer Abdeckkappe (10) abgedeckt ist, dadurch gekennzeichnet, daß die Gassack-Aufprallschutz-Baueinheit vor der Innenseite der Fensterscheibe (6) in dem durch die Fensterbrüstung (3) der Seitentür und dem durch den oberen Abschnitt des der B-Säule oder C-Säule (4) der Kraftfahrzeugkarosserie benachbarten Türrahmens (5) begrenzten Eckfeld angebracht ist, wobei die Abdeckkappe (10) mit Fangbändern (12) versehen ist, die den Weg der Abdeckkappe (10) in einer solchen Weise begrenzen, daß diese die Ausdehnung des sich ausdehnenden Gassacks (9) zum einen Teil nach oben unmittelbar vor die Fensterscheibe (6) und zum anderen Teil vor den oberen Abschnitt der Innenverkleidung (1) der Seitentür (2) lenkt und der sich ausdehnende Gassack (9) bzw. die Abdeckung (10) den Fahrzeuginsassen (13) nicht berührt.

2. Gassack-Aufprallschutz-Baueinheit nach Anspruch 1, dadurch gekennzeichnet, daß diese auf der Fensterbrüstung (3) angeordnet ist.

3. Gassack-Aufprallschutz-Baueinheit nach Anspruch 1, dadurch gekennzeichnet, daß diese mit ihrem unteren Abschnitt in die Fensterbrüstung (3) hineinragt.

## Claims

1. Air bag impact protection module (7) for the side doors (2) of vehicles for protection against a dynamic side impact, the unfolded air bag (9) of which extends into the space between the head-thorax region of the vehicle occupant (13) and the immediately adjacent side structure of the vehicle and in the rest state is covered by a cover cap (10), characterised in that the air bag impact protection module is introduced in front of the inner side of the window pane (6) in the corner panel bordered by the window breast (3) of the side door and by the upper section of the door frame (5) adjacent the B column or C column (4) of the vehicle body, wherein the cover cap (10) is provided with catching tapes (12) which limit the path of the cover cap (10) in such a way that they control the expansion of the expanding air bag (9) partly upwards immediately in front of the window pane (6) and partly in front of the upper section of the inner panelling (1) of the side door (2), and the expanding air bag (9) or the cover (10) does not contact the vehicle occupant (13).

2. Air bag impact protection module according to claim 1, characterised in that it is arranged on the window breast (3).

3. Air bag impact protection module according to claim 1, characterised in that its lower section projects into the window breast (3).

## Revendications

1. Module de protection antichoc avec airbag (7) pour les portes latérales (2) de véhicules automobiles, pour la protection contre tout choc dynamique latéral, dont l'airbag déployé (9) s'étend dans l'espace situé entre la zone tête-thorax des occupants (13) et la structure latérale, immédiatement avoisinante du véhicule automobile, et qui est recouvert à l'état de repos d'une capuche de recouvrement (10), caractérisé en ce que le module de protection antichoc avec airbag est fixé, à l'avant de la face intérieure de la vitre (6), dans le champ angulaire délimité par l'allège de fenêtre (3) de la portière latérale et celui délimité par la section supérieure du châssis 5 de portière proche de la colonne B ou de la colonne C (4) de la carrosserie du véhicule, la capuche de recouvrement étant munie de bandes de maintien (12) qui limitent le trajet de ladite capuche (10), de manière telle que celle-ci dirige la dilatation de l'airbag (9) en cours de gonflage d'une part vers le haut directement devant la vitre (6) de la fenêtre, et d'autre part devant la section supérieure de l'habillage intérieur (1) de la portière latérale (2), et que l'airbag (9) en cours de gonflage, ou le recouvrement (10), n'entre pas en contact avec les occupants (13) du véhicule.

2. Module de protection antichoc avec airbag selon la revendication 1, caractérisé en ce que ce module est disposé sur l'allège (3) de la fenêtre.

3. Module de protection antichoc avec airbag selon la revendication 1, caractérisé en ce que ce module pénètre dans l'allège (3) de la fenêtre par sa section inférieure.
